# EUROPEAN PATENT APPLICATION

(11) **EP 1 085 760 A2**
(43) Date of publication of application: **21.03.2001**
(21) Application number: 00307992.8
(22) Date of filing: 14.09.2000
(51) Int. Cl.: H04N 7/24

(54) **Unit connection setting methods and apparatus**

(30) Priority: 16.09.1999 JP 26271899
(71) Applicant: SONY CORPORATION, Tokyo 141 (JP)
(72) Inventor: Sato, Naoyuki, Shinagawa-ku, Tokyo (JP); Sato, Makoto, Shinagawa-ku, Tokyo (JP)
(74) Representative: Pilch, Adam John Michael

(57) **Abstract**

A system and method for configuring a communication unit having one or more subunits. A plug (120A) of one of the unit's subunits (110A) is first configured. The configured plug (120A) of the subunit (110A) is then coupled to a plug (130A) of the unit (100A). The technique may be used to carry out communication between two devices which each have at least one unit and one subunit. When implemented to carry out communication between two devices, the process involves configuring the plug (120A) of a subunit (110A) of a first device, connecting the plug (120A) of the subunit (110A) of the first device to a plug (130A) of a unit (100A) of the first device, configuring a plug (120B) of a subunit (110B) of a second device, connecting the plug (120B) of the subunit (110B) of the second device to a plug (130B) of a unit (100B) of the second device, and coupling the plug (130A) of the unit (100A) of the first device to the plug (130B) of the unit (100B) of the second device.

## Description

This invention relates to unit connection setting methods and apparatus, such as those suitable for configuring network nodes for communication over a network.

A network system in which a plurality of network units are coupled via an IEEE 1394 bus has been proposed.

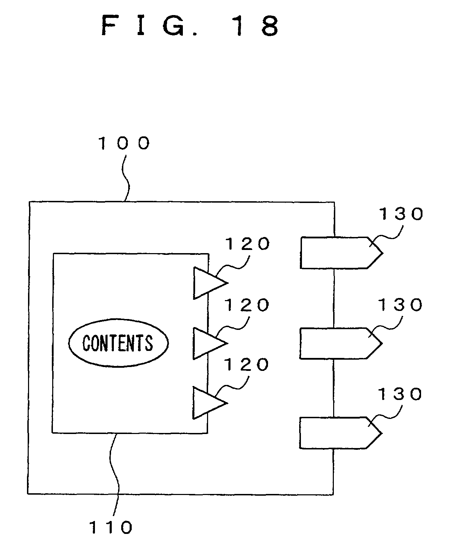

FIG. 18 is a schematic diagram of an illustrative unit 100 suitable for use in the proposed network. The unit includes one or more subunits, as illustrated by subunit 110. For example, when unit 100 is a VTR (Video Tape Recorder), the unit may include a tuner subunit and a tape recording/reproducing subunit. Further, both the unit and each subunit include one or more plugs, illustrative plugs of unit 100 being shown as plugs 130 and illustrative plugs of subunit 110 being shown as plugs 120.

In a network having a multiple of units, when data is to be transmitted from a first unit to a second unit, a logical connection between the first and second units must be established. Such connection requires that the first and second units be set up, that a plug of the first unit be connected to a plug of the second unit, and that data be pulled from a predetermined subunit of the first unit and pushed to a predetermined subunit of the second unit.

It has been recognized that heretofore the communication set up operations for networks that include units like the unit of FIG. 18, have been carried out by controllers which implement a limited set up procedure. Thus, when a unit requires a communication set up procedure unlike that recognized by the controller, the set up can not be properly executed.

It is an aim of at least an embodiment of the invention to provide a connection setting system and method in which the connection setting procedure can be implemented efficiently and consistently.

It is another aim to provide a connection setting system and method involving configuration of a subunit, connection of a plug of the subunit to a plug of the corresponding unit and configuration of the unit plug.

It is still another aim of the invention to provide a connecting setting system and method in which the type of data handled by respective plugs of a subunit is determined.

It is a further aim to provide a connection setting system and method in which the type of data handled by respective plugs of a unit is determined.

It is yet another aim to provide a connection setting system and method in which a plug of a subunit is coupled to a plug of a unit which handles the same type of data as the subunit plug.

The invention provides a system and method for configuring a communication unit having one or more sub-units. A plug of one of the unit's sub-units is first configured. The configured plug of the sub-unit is then coupled to a plug of the unit. The invention may be used to carry out communication between two devices which each have at least one unit and one sub-unit. When implemented to carry out communication between two devices, the invention involves configuring a plug of a sub-unit of a first device, connecting the plug of the sub-unit of the first device to a plug of a unit of the first device, configuring a plug of a sub-unit of a second device, connecting the plug of the sub-unit of the second device to a plug of a unit of the second device, and coupling the plug of the unit of the first device to the plug of the unit of the second device.

Other aspects of the invention are set out in claims 1, 7, 9 and 15.

The following detailed description, given by way of example and not intended to limit the present invention solely thereto, will best be appreciated in conjunction with the accompanying drawings, wherein like reference numerals denote like elements and parts, in which:

FIG. 1 shows a network system in which the present invention may be implemented.

FIG. 2 shows an illustrative embodiment of the controller depicted in Fig. 1.

FIG. 3 is a diagram showing the structure of a data transmission cycle for a unit in an IEEE 1394 implementation of the FIG. 1 system.

FIG. 4 is a diagram useful for explaining the address space structure of the CSR architecture.

FIG. 5 is a diagram to which reference will be made in explaining offset addresses, names, functions and the like as they relate to the CSR architecture.

FIG. 6 is a diagram to which reference will be made in explaining the general ROM configuration of the invention.

FIG. 7 is a diagram for explaining the bus info block, root directory and unit directory aspects of the general ROM.

FIG. 8 is a diagram to which reference will be made in explaining an arrangement of Plug Control Registers (PCRs) in accordance with the invention.

FIGS. 9(A) to 9(D) arc diagrams showing illustrative arrangements of an output Master Plug Register (oMPR), an output Plug Control Register (oPCR), an input Master Plug Register (iMPR) and an input Plug Control Register (iPCR) of the invention, respectively.

FIG. 10 is a diagram showing a relationship between plugs, plug control registers and an isochronous channel in accordance with the invention.

Fig. 11 is an illustrative configuration of units, unit plugs, subunits and subunit plugs in accordance with the invention.

FIG. 12 shows an AV/C command which may be used to set up the units depicted in Fig. 11.

FIG. 13 shows standard, command or the like used to connect plugs between the units depicted in Fig. 11.

Fig. 14 is a flow chart showing a process for connecting unit plugs in accordance with the invention.

FIG. 15 shows an AV/C command used for the data push and data pull settings of the invention.

FIG. 16 shows the format of a CONFIGURE command which can be used for configuring subunit plugs in accordance with the invention.

FIG. 17 shows the format of a CONNECT command which can be used to connect subunit plugs to their respective units in accordance with the invention.

FIG. 18 is a schematic diagram showing the arrangement of a network unit.

FIG. 19 is a diagram useful in describing the format of an isochronous communication packet.

FIG. 20 is a diagram useful in describing the format of an asynchronous communication packet.

A mode for carrying out the invention will hereinafter be described with reference to the drawings.

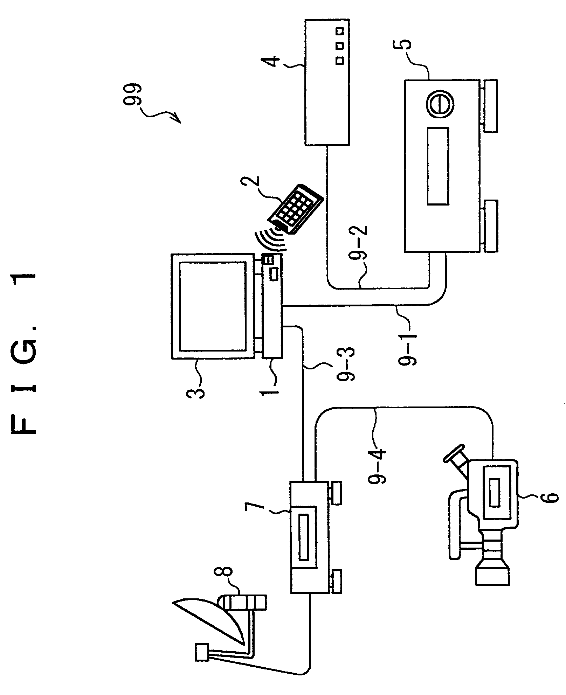

FIG. 1 shows a network system in which the invention may be implemented. The system includes a HDD (hard disk drive) 4, a VTR (video tape recorder) 5, a video tape recorder having a built-in camera 6 and an IRD (Integrated Receiver Decoder) 7 serving as a digital satellite broadcast receiver and buses 9-1 to 9-4. The controller 1, HDD 4, VTR 5, the video tape recorder having a built-in camera 6 and the IRD 7 may be IEEE 1394 nodes, and buses 9-1 to 9-4 may be IEEE 1394 buses. That is, the network system of FIG. 1 may be set up in accordance with the Institute of Electrical and Electronic Engineers Standard known as "IEEE 1394". Incidentally, a monitor 3 may be connected to the controller 1, and an antenna 8 may be connected to the IRD 7.

The controller 1 may receive an infrared signal generated by a commander 2 in response to a user operation and may control each node (hereinafter referred to as "unit" or "device") connected to the network in response to such signals. For example, when an input and/or output connection is set by the user operating the commander 2, the controller executes an input and/or output connection setting on the corresponding network unit.

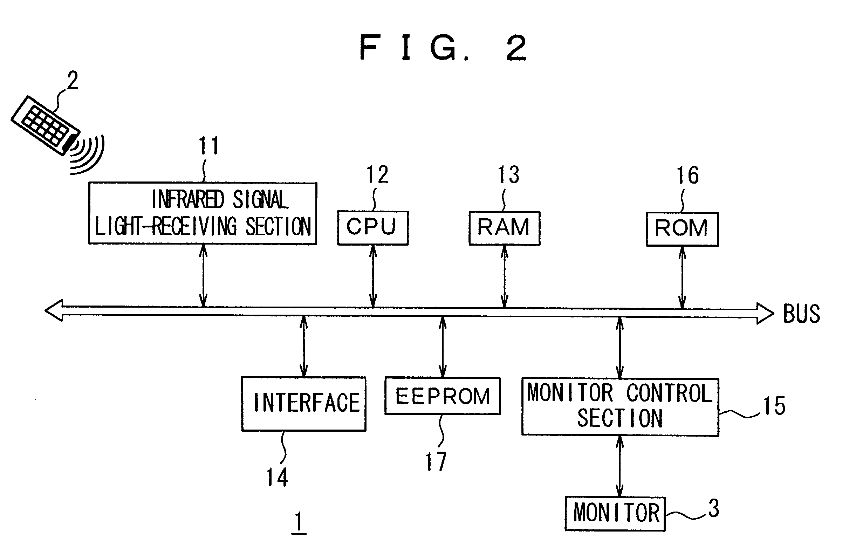

FIG. 2 shows an illustrative embodiment of the controller 1. An infrared signal light-receiving section 11 receives infrared signals from the commander 2, demodulates a control signal contained in the infrared signal to generate an electrical signal, and transfers the electrical signal to a CPU (Central Processing Unit) through an internal bus. The CPU 12 controls the system units based on the electrical signals received from the light-receiving section 11 and the status of the respective units. More specifically, basis unit control on the received signals and the unit status stored in a RAM (Random Access Memory) 13. Control is implemented through a program stored in ROM (Read Only Memory) 16 and a unit interface 14.

The RAM 13 may also store one or more programs used by the CPU 12 and one or more status parameters for each system unit. The interface 14 may be an I/O interface based on the IEEE 1394 standard. A monitor control section 15 converts data transmitted from the CPU 12 or data stored in the RAM 13 into a video signal and outputs the converted data to a monitor 3 for display. The ROM 16 stores programs used by the CPU 12. An EEPROM (Electrically Erasable Programmable Read-Only Memory) 17 is used to store items such as the controller manufacturer, the manufacturer's ID, a unit ID or any other information that should be saved after the power supply is turned off.

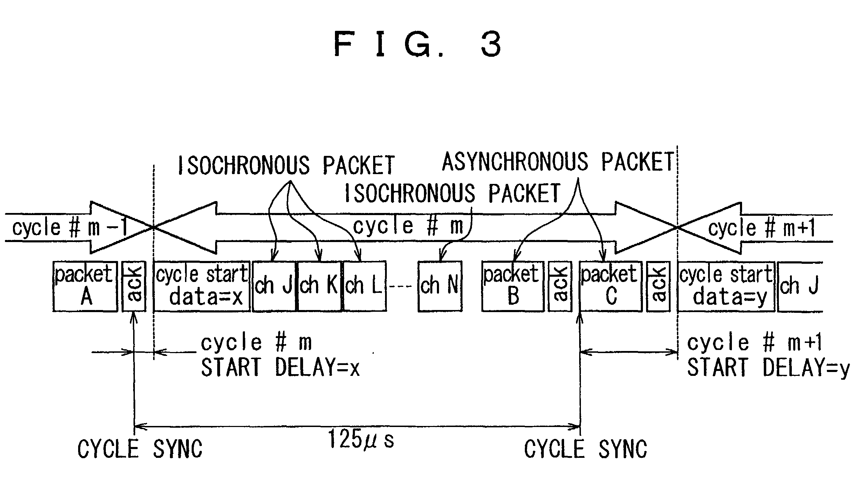

FIG. 3 is a diagram showing the structure of a data transmission cycle for a unit (device) in an IEEE 1394 implementation of the FIG. 1 system. In accordance with the IEEE 1394 standard, data is divided into packets, and transmitted in a time-division manner based on a cycle duration of 125 µs. This cycle is initiated by a cycle start signal supplied from a cycle master node (any one of units shown in FIG. 1) having a cycle master function.

An isochronous packet may maintain a band (referred to as a band although it is a time unit) used for the transmission from the start of all cycles. Therefore, in the isochronous transmission, the transmission of data within a predetermined time band may be guaranteed. However, when a transmission error occurs, a mechanism for protecting data from the transmission error may not be provided, and data will be lost.

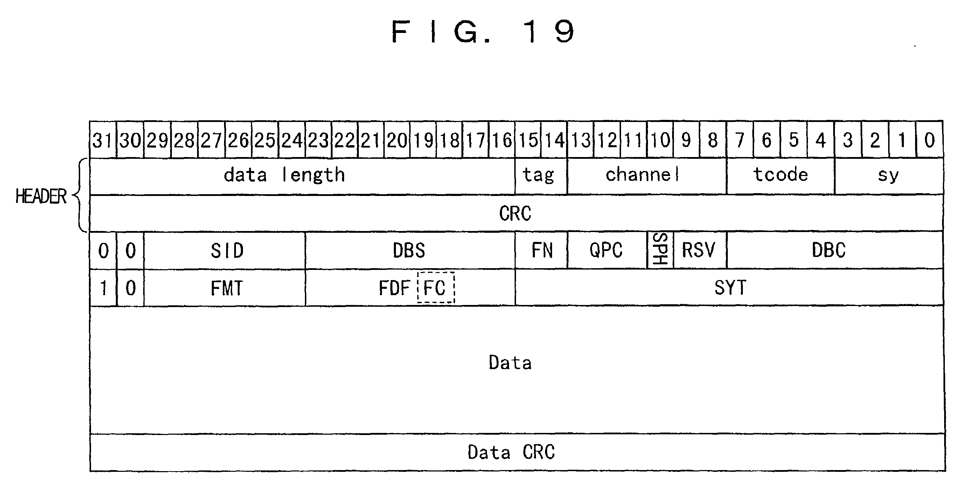

FIG. 19 is a diagram showing a part of an isochronous transfer packet used for the aforesaid isochronous transfer. A header is assigned to this packet, which occupies 32 x 2 bits from front and includes synchronizing pattern sy, packet code tcode, channel, tag, data length and error correction code CRC. The subsequent 32 bits are assigned to: count value of successive packets DBC when data of a fixed size are divided to be assigned to each packet, Reserve RSV, Marker SPH indicating whether there is a source packet header or not, Divisional number of source packet FN, Data block size DBS, Identification code of its own SID and so on. The further subsequent 32 bits are assigned to: Recording area SYT such as a time stamp, Sampling frequency FDF of transmitted data, Transmission format FMT and so on. The remaining bits is assigned the transmitted data made of source data with 32 bits as a unit, and their error correction code, CRC. Additionally, in the present example, one bit at a specific position in the eight bits dedicated to the Sampling frequency FDF is used for adding a flag FC indicating that the transmission rate of audio signal is being controlled (the flag is indicated by broken line in FIG. 19). If this flag FC is a "1", a mode in which the transmission rate is controlled is entered. If the flag FC is "0", a mode in which the transmission rate is not controlled is entered. Further, in the following description, a mode in which the transmission rate is controlled will be referred to as a flow control mode.

During the unused time of isochronous transmission of cycles (a result of arbitration) the node which maintains a bus may transmit asynchronous packets. In asynchronous transmission, by using "acknowledge" and "retry", a reliable transmission may be guaranteed, but the lime of transmission may not be constant.

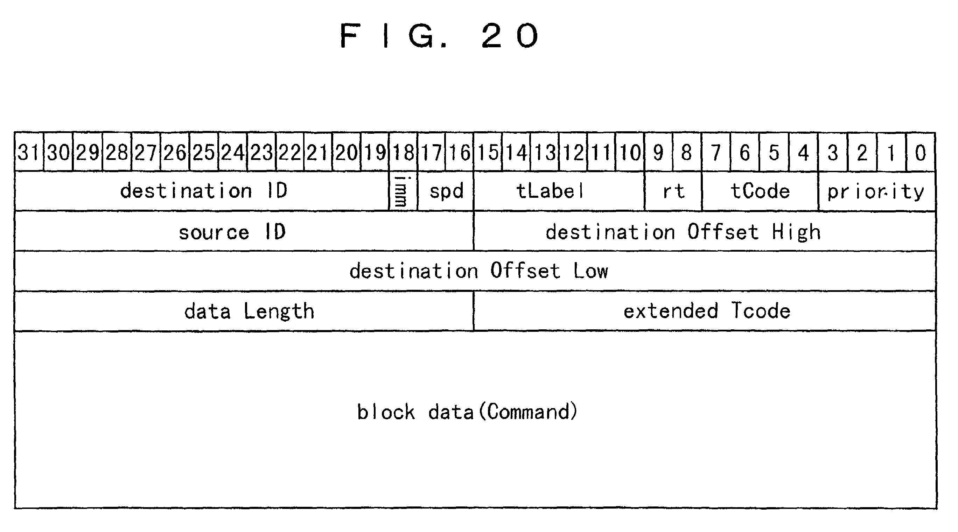

FIG. 20 is a diagram showing an asynchronous transfer packet through which asynchronous communication may be carried out. The source of the packet is specified by indicating the originating node's address, etc. The originating node's number and bus number, or the like can be specified. The first 32 bits of the packet include indicators of the Priority level of this packet (priority), Code of this packet (Code t), Retry code of this packet (rt), Label assigned to this packet (Label t), Transmission speed (spd) and Identification data indicating the relation with successive packets (imm). Moreover, data specifying an address of destination node (destination Offset High, destination Offset Low) and data indicating the destination node and bus (destination ID) are assigned. Subsequently. Data length of the transmission data (data Length), etc. arc further assigned and then the transmission data is assigned in 32 bit units.

In order for a predetermined node to execute isochronous transmission, such node should be configured for isochronous function. Also, at least one of the nodes configured for isochronous function should perform a cycle master function. Further, at least one of system nodes should function as an isochronous resource manager (IRM).

The IEEE 1394 protocol may be implemented on the basis of a CSR (Control & Status Register) having a 64-bit address space prescribed by the ISO/IEC 13213 specification, hereby incorporated by reference.

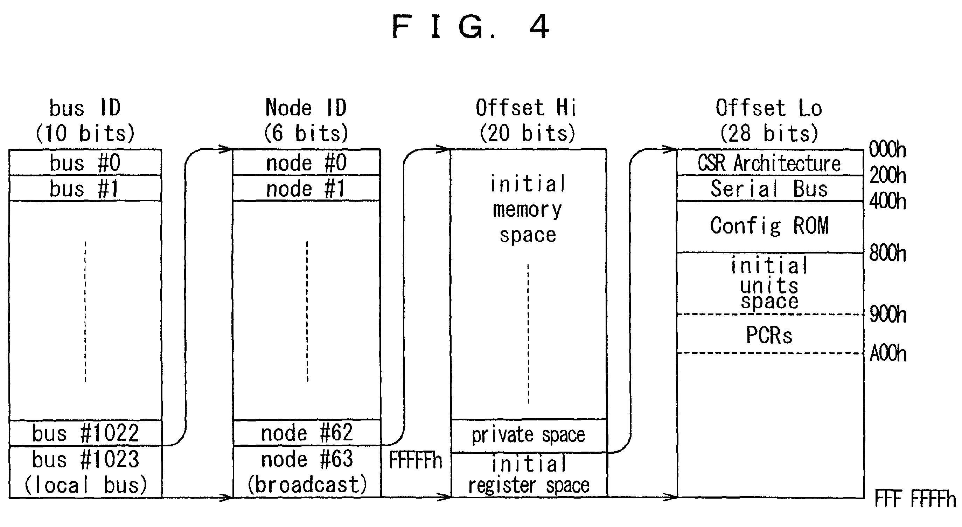

FIG. 4 is a diagram to which reference will be made in explaining the address space structure of the CSR architecture. The upper 16 bits of the CSR are used to indicate node IDs of one or more nodes on one or more IEEE 1394 buses. The remaining 48 bits of the CSR rc used to designate an address space given to each node. The upper 16 bits may be further divided into a 10-bit bus ID and a 6-bit physical ID (node ID in a narrow sense). The case in which the upper 16 bits arc all is is used for a special purpose, and thus the 16 bits can be used to designate 1023 buses and 63 nodes.

Of a 256-terabyte address space prescribed by the lower 48 bits of the CSR, the space prescribed by the upper 20 bits may be divided into an initial register space used in a register peculiar to CSR of 2048 bytes and a register peculiar to the IEEE 1394 and an initial memory space and the like. The space prescribed by the lower 28 bits may be used as a configuration ROM (Configuration Read Only Memory), an initial unit space peculiar to the node and a plug control register (PCRs) if the space prescribed by the upper 20 bits is the initial register space.

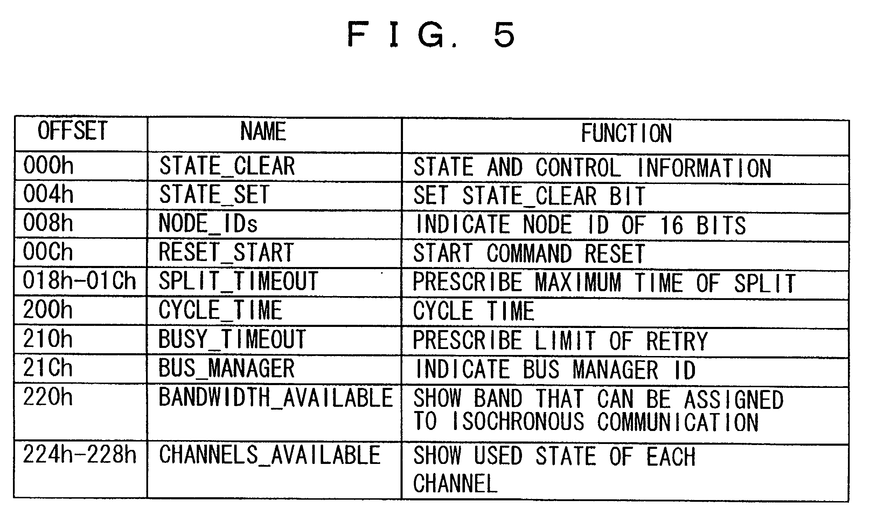

FIG. 5 is a diagram to which reference will be made in explaining offset addresses, names, functions and the like as they relate to the CSR architecture. The offset of FIG. 5 shows the offset address from the address FFFFF000000h (numerals affixed with h express a hexadecimal notation) from which the initial register space starts. A bandwidth available register having an offset 220h indicates the band assigned for isochronous communication. Although each node may contain the CSR of FIG. 4, only the bandwidth available register of the isochronous resource manager is valid. In other words, only the isochronous resource manager effectively includes the bandwidth available register. The bandwidth available register has a maximum value when no isochronous communication is assigned to the band, and the value is decreased each time communication is assigned to the band.

Offsets 224h to 228h of FIG. 5 correspond to a channels available register. More specifically, respective bits of the channels available register correspond to channel numbers 0 to 63. If a bit is 0, then the channel corresponding to that bit was already assigned. Only the channels available register of the node which is being operated as the isochronous resource manager is effectively valid.

Referring back to FIG. 4, a configuration ROM based on a general ROM (read only memory) format may be located at the addresses 400h to 800h within the initial register space.

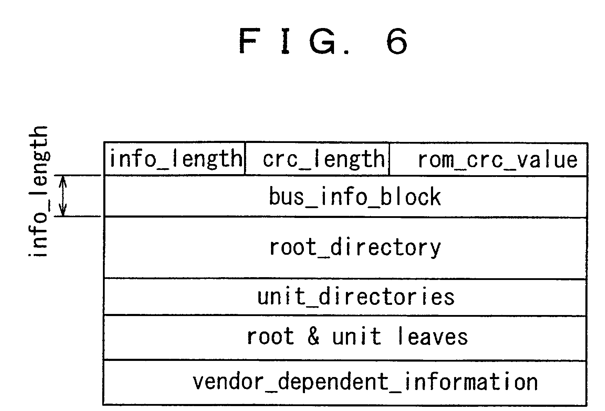

FIG. 6 is a diagram to which reference will be made in explaining the general ROM. A node accessible via the IEEE 1394 standard may have a plurality of units which can be independently operated while sharing a common address space. Unit directories indicate version and position of software relative to respective units. Although the positions of bus info block and root directory arc fixed, the positions of other blocks may be designated by an offset address.

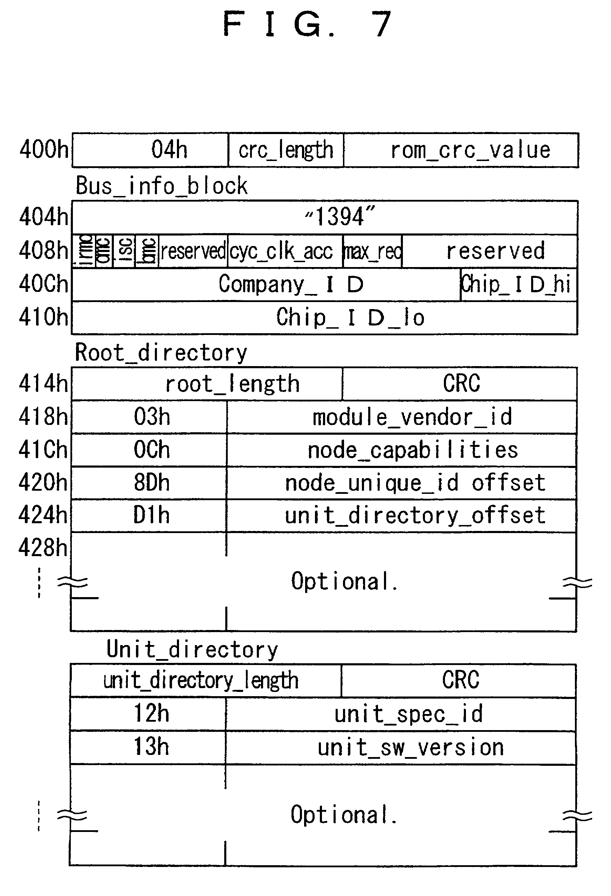

FIG. 7 is a diagram showing details of the bus info block, root directory and unit directory. An ID number indicative of a manufacturer of a device may be stored in Company-ID of the bus info block. A unique ID which does not overlap those of other devices may be stored in the device itself. Also, according to the IEC 1883 standard, hereby incorporated by reference, 00h is written in the first octet of the unit spec ID of the unit directory of device which complies with IEC 1883. A0h is written in the second octet, and 2Dh is written in the third octet. Further, 01h is written in the first octet of unit switch version and 1 is written in the LSB (Least Significant Bit) of the third octet.

In order to control the input and output of a device, each node may include a PCR (Plug Control Register), as described in the IEC 1883 standard. The PCKs are specified in addresses 900h to 9FFh of the CSR's initial unit space. The PCRs are used to create logical signal paths.

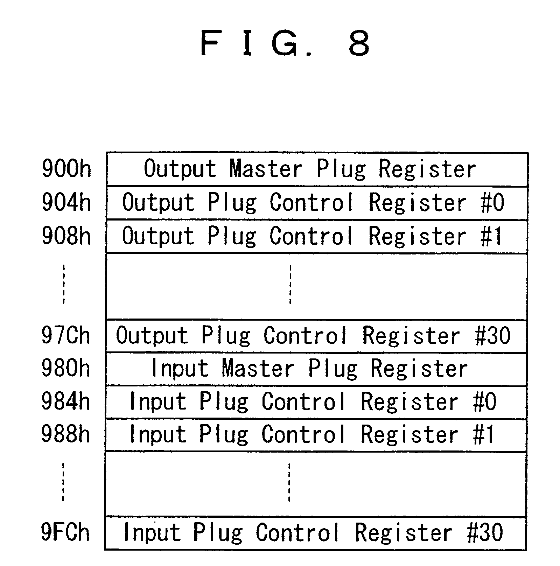

FIG. 8 is a diagram to which reference will be made in explaining an arrangement of PCRs. The PCRs may include an oPCR (output Plug Control Register) expressing an output plug and an iPCR. (input Plug Control Register) expressing an input plug. Also, the PCRs may include registers oMPR (output Master Plug Register) and iMPR (input Master Plug Register), respectively, indicative of general information pertaining to output plugs and input plugs peculiar to each device. Each device has only one oMPR and iMPR. However, each device can include a plurality of oPCRs and iPCRs corresponding to individual plugs depending upon the capability of the device. The PCRs shown in FIG. 8 include 31 oPCRs and 31 iPCRs. The flow of isochronous data may be controlled by operating the registers corresponding to the PCRs.

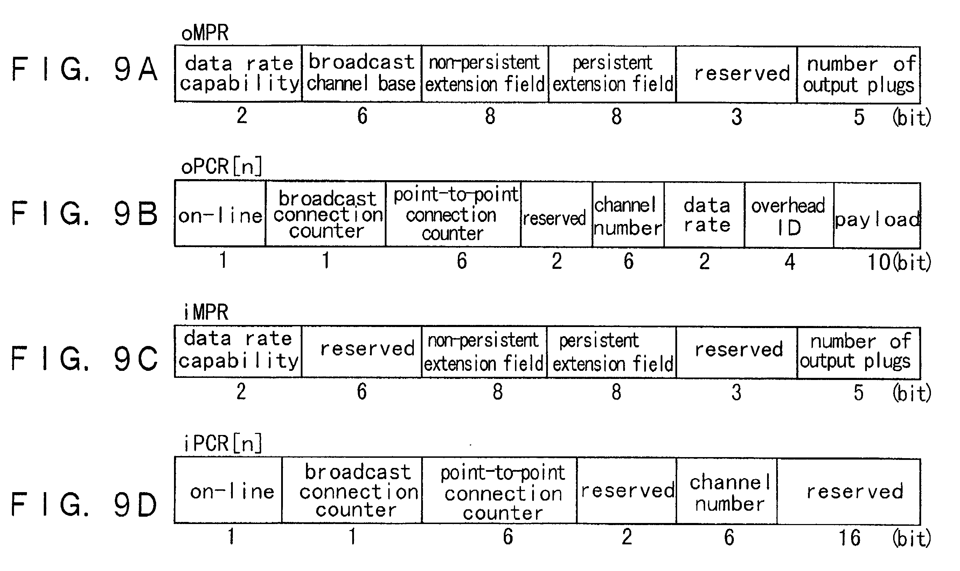

FIGS. 9(A) to (D) arc diagrams showing illustrative arrangements of oMPR, oPCR, iMPR and iPCR, respectively. In the two MSBs (Most Significant Bits) of the oMPR and iMPR are stored a code indicative of a maximum transmission rate of isochronous data that the device can transmit or receive. A broadcast channel base of the oMPR indicates a channel number used for broadcast output.

In the 5 LSBs (Least Significant Bits) of the oMPR are stored a value indicative of the number of output plugs for the device, i.e., the number of oPCRs. The 5 LSBs of the iMPR store a value indicative of the number of input plugs for the device, i.e. the number of iPCRs. In both oMPR and iMPR non-persistent extension field and a persistent extension field arc set aside for future expansion.

The MSB of the oPCR and the iPCR arc designated as an on-line indicator. The on-line indicator indicates the state of the plug. If such value is 1, the plug is ON-LlNE. If such value is 0, the plug is OFF-LINE. The value of a broadcast connection counter of the oPCR and the iPCR indicates the existence (1) or the absence (0) of a broadcast connection. Both the oPCR and iPCR are provided with 6 bit point to point connection counters for indicating the respective number of point to point connections for the plugs.

A 6 bit channel number is also provided in both the oPCR and the iPCR for indicating the respective number of isochronous channels to which each plug is connected. In the oPCR a 2 bit data rate indicator is provided for indicating the real transmission rate of isochronous data outputtcd from the plug. The oPCR also includes an overhead ID of 4-bit width for indicating an overheard band width of isochronous communication. Further, the oPCR includes a 10 bit payload indicator for indicating the maximum data rate that can be handled by the plug.

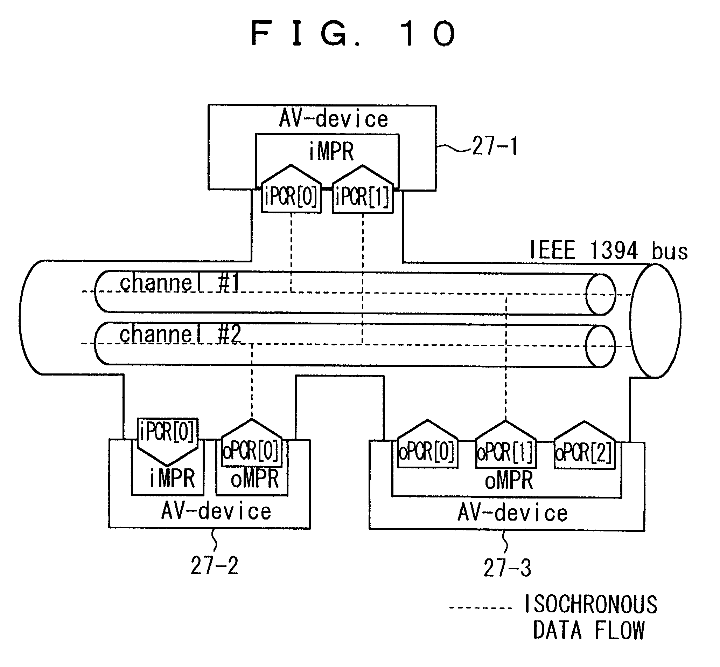

FIG. 10 is a diagram showing a relationship between plugs, plug control registers and an isochronous channel. AV devices 27-1 to 27-3 may be connected by an IEEE 1394 bus. As can be seen from the figures, the transmission rate of oPCR[0], oPCR[1] and oPCR[2] are specified by the oMPR of AV device 27-3. Isochronous data of oPCR[1] is transmitted to a channel #1 of the IEEE 1394 bus. The transmission rates of iPCR[0] and iPCR[1] are specified by the iMPR of AV device 27-1. Based on iPCR[0] whose input channel #1 was designated, the AV device 27-1 reads isochronous data transmitted to the channel #1 of the IEEE 1394 bus, Similarly, AV device 27-2 transmits isochronous data to a channel #2 via oPCR[0], and AV device 27-1 reads isochronous data from channel #2 via iPCR(1).

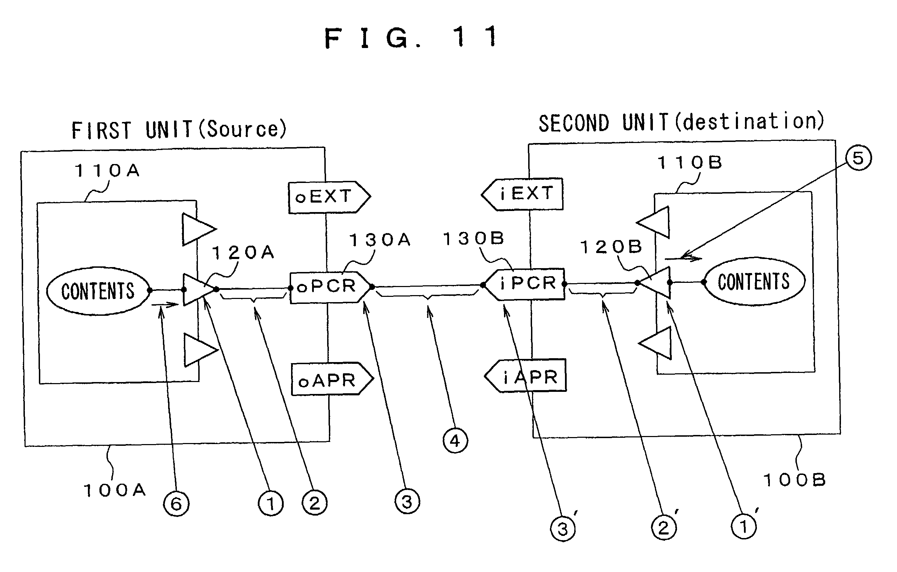

Next, a connection setting process will be described in connection with FIG. 11. As can be seen from FIG. 11, data is transmitted from a subunit 110 of a first unit 100A (source side) to a subunit 110B of a second unit 100B (destination side). Units 100A and 100B are part of a network. The connection setting process preferably includes the following operations (a) to (c) and is implemented through a controller such as controller 1 of FIGS. 1 and 2.

### (a) SETUP OF FIRST AND SECOND UNITS 100A, 100B:

The setup of the first unit 100A and the setup of the second unit 100B may be executed in any order.

The setup of the first unit 100A may be ordered in the following manner: configuration of a plug 120A of the subunit 110A, connection of the plug 120A of the subunit 110A to a plug 130A of the unit 100A, and configuration of a plug 130A of the unit 100A.

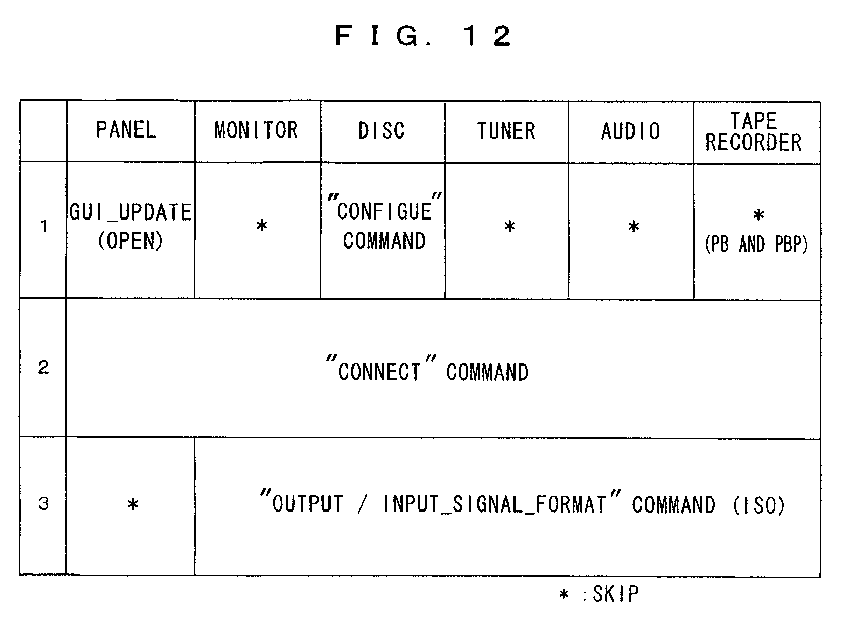

FIG. 12 shows an AV/C command which may be used to set up units 100A and 100B. The AV/C command is described in detail in "AV/C Digital Interface Command Set General Specification Version 3.0 April 15, 1998" or "AV/D Disc Subunit General Specification Version 1.0FC2 January 11, 1999", both hereby incorporated by reference.

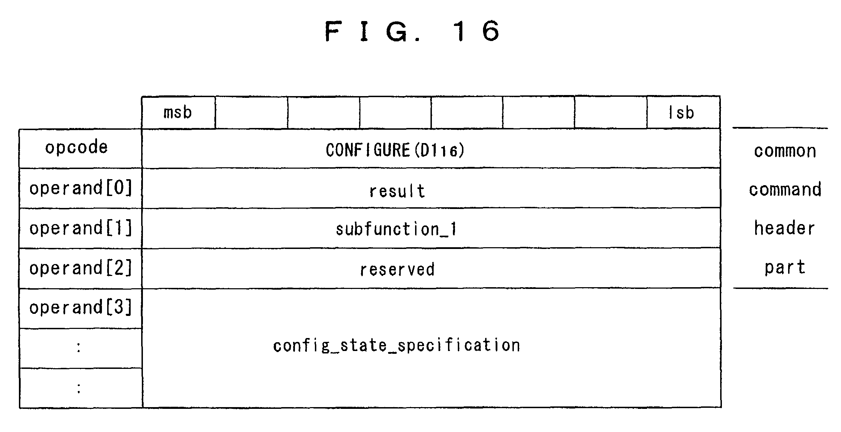

The item portion of FIG. 12 indicates commands for the configuration of plugs for respective subunits. Accordingly, when the subunit is a disc recording/reproducing section (Disk), a CONFIGURE command is used to configure the subunit plug. FIG. 16 shows a format of the CONFIGURE command.

When the subunit is a panel section (Panel) in which a user executes an operation on the monitor, a GUI-UPDATE command is used to configure the subunit plug. Incidentally, "*" in FIG. 12 means that corresponding processing should be skipped. For example, subunit item "tune", the corresponding data is uniquely determined, and so configuration processing of the tuner plug is skipped.

Next, plug 120A of the subunit 110A and the plug 130A of the unit 100A arc connected. In the illustrative embodiment of FIG. 11, plug 120A handles real time data and is connected to an oPCR plug of unit 100A to effect isochronous transmission. Alternatively, when plug 120A does not handle real time data, plug 120A is connected to an oAPR of unit 100A to effect asynchronous transmission. Incidentally, the above-mentioned oPCR and oAPR plugs may be virtual plugs and may be connected to an IEEE 1394 bus. Also, oEXT denotes a physical external output terminal.

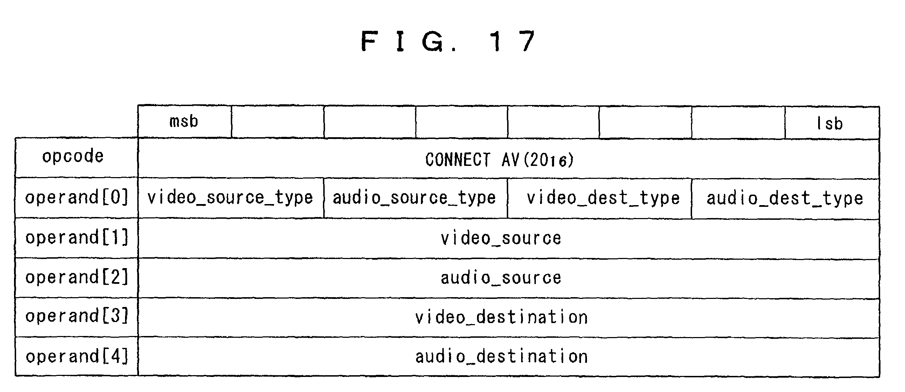

Portion "2" of FIG. 12 shows commands that are used to connect plugs of the subunits to their respective units. In this case, only a CONNECT command is provided. FIG. 17 shows a format of the CONNECT command. As can be seen from FIG. 17, CONNECT command may specify a source and a destination.

In configuring plug 130A a data format handled by the plug 130A is determined. Portion '3) of FIG. 12 shows command for making such a determination. That is, with respect to the configuration of the plug oPCR, an OUTPUT-SIGNAL-FORMAT command is used. Incidentally, when the plug oAPR is used, the operation of determining the data format need not be performed.

In a manner similar to that described in connection with unit 100A and subunit 110/A, the setup of unit 100B and subunit 110B involves configuring plug 120B of subunit 110B, connecting plug 120B to plug 130B of unit 100B, and configuring plug 130B.

### (b) CONNECTION OF PLUGS OF FIRST AND SECOND UN ITS 100A, 100B:

The plug 130A connected to the plug 120A of the configured subunit 110A of the first unit 100A and the plug 1308 connected to the plug 120B of the configured subunit 110B of the second unit 100B may be connected with each other. In this case, plugs which handle data of the same kind are connected to each other.

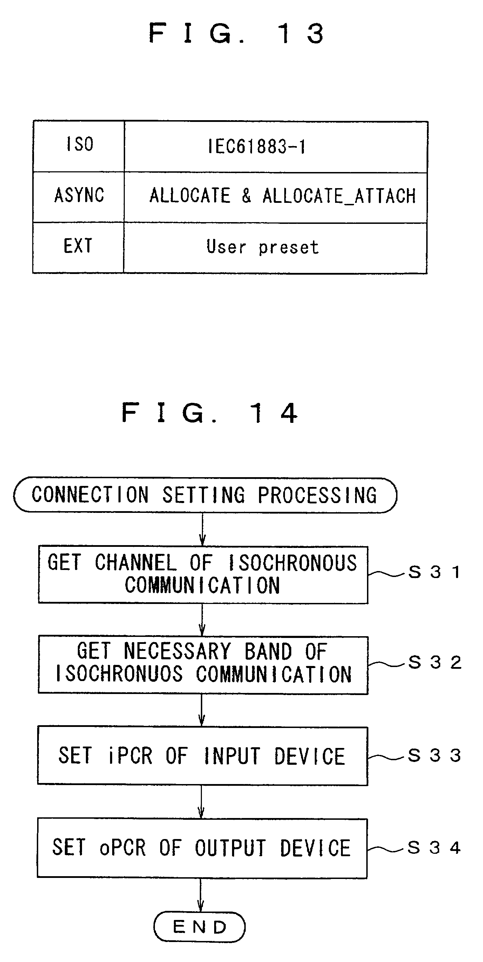

FIG. 13 shows standard, command or the like used to connect plugs between the units. The connection between the plug oPCR and the plug iPCR shown in FIG. 11 may be executed by the standard of IEC 61883-1, hereby incorporated by reference. FIG. 14 is a flow chart showing a connection setting process according to this standard.

Initially, at a step S31, the controller 1 issues an isochronous communication channel get request to a node which is being operated as an isochronous resource manager (hereinafter referred to as "IRM"), e.g. IRD 7. In response to this request, the IRM node sets to 0 the bit corresponding to a vacant channel of the CSR channel available register.

Subsequently, at a step S32, the controller 1 issues an isochronous communication band get request to the IRM node. In response to this request, the IRM node subtracts a numerical value corresponding to the requested band from the current value stored in the CSR bandwidth available register.

At step S33, the controller 1 selects an unused iPCR (iPCR[j]) of the second unit 100B, sets the isochronous channel number (channel number obtained at the step S31) to the number of the used channel and sets the point-to-point connection counter to 1 (see FIG. 9(D)).

At step S34, the controller 1 selects an unused oPCR (oPCR[k]) of the first unit 100A, sets the channel number of oPCR[k] to the same number as the channel number of iPCR[j], and sets the point-to-point connection counter of oPCR[k] to 1 (see FIG. 9(B)).

As described above, the channel, band, output plug and input plug are configured, thereby ending the connection setting process for isochronous transmission.

As shown in FIG. 13, the connection between the plug oAPR and the plug iAPR may be executed by using an ALLOCATE & ALLOCATE-ATTACH command. Further, the connection of the plugs oEXT and iEXT may be executed by a user.

### (c) PULL AND PUSH OF DATA (Pull and Push the Stream):

The push of data (Push the Stream) is executed in order to place the subunit 110B of the second unit 100B in the data reception state. Thereafter, the pull of data (Pull the Stream) is executed in order to place the subunit 110A of the first unit 100A in the data transmission state.

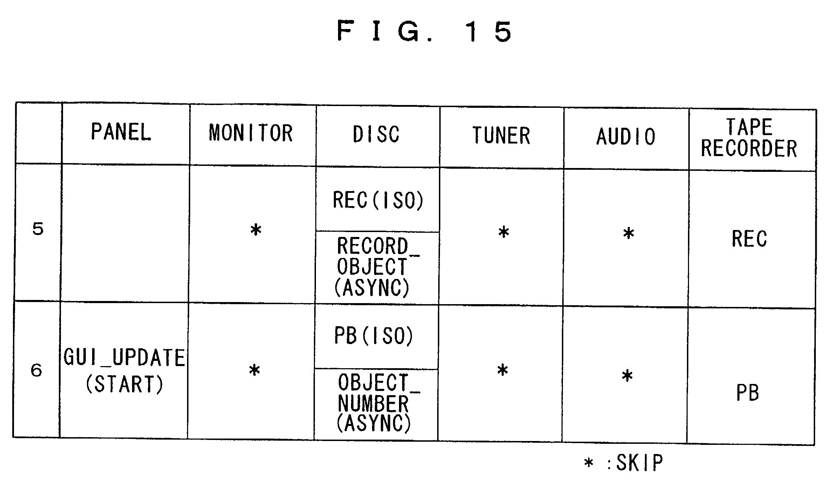

Portion "5" of FIG. 15 shows an AV/C command used for the data push setting. Portion "6" of FIG. 15 shows an AV/C command used for the data pull setting. For example, when a subunit handles real time data of a disk recording/reproducing section (Disc), a REC command, is used for the push setting, and a PB command is used for the pull selling. Also, for example, when a subunit handles data from a disk recording/reproducing section (Disc which is not real time data), a RECORD-OBJECT command is used for the push setting, and an OBJECT-NUMBER command is used for the pull setting. Moreover, when the subunit is a tape recording/reproducing section (Tape recorder), the REC command is used for the pus selling, and the PB command is used for the pull selling. Incidentally, "*" in FIG. 15 means that the corresponding processing should be skipped.

By executing connection setting processing described above, it becomes possible to transmit data from the subunit 110 of the first unit 100A (source side) to the subunit 110B of the second unit 100B (destination side). Thus, a uniform and efficient connection setting procedure for use in a network such as the network of FIG. 1 is demonstrated. The procedure may be applied to any combination of FIG. 1 units, and moreover, may be applied in other network systems.

While the invention has been described in connection with an IEEE based system, it may be applied to other network systems which require the configuration of a plug of a subunit, the connection between a plug of the suhunit and the plug of the corresponding unit and the configuration of the plug of the unit.

According to this invention, a connection setting procedure is provided in which the plug of a subunit within a unit is configured and then the plug of the subunit and the plug of the unit are connected. The connection setting procedure can be executed consistently.

While the present invention has been particularly shown and described in conjunction with preferred embodiments thereof, it will be readily appreciated by those of ordinary skill in the art that various changes may be made without departing from the scope of the invention. Therefore, it is intended that the appended claims be interpreted as including the embodiments described herein as well as all equivalents thereto.

## Claims

1. A connection setting method for an apparatus having at least one unit and one subunit, comprising the steps of:
configuring a plug of said subunit; and
connecting said plug of said subunit to a plug of said unit.

2. The method according to claim 1, further comprising the step of configuring said plug of said unit.

3. The method according to claim 2, wherein said step configuring said plug of said unit involves specifying the type of data that is handled by said plug of said unit.

4. The method according to claim 1, further comprising the step of connecting said plug of said unit to a plug of at least one other unit.

5. The method according to claim 4, wherein further comprising the steps of:
incrementing a counter which indicates the number of connections between units; and
when said plug of said unit handles isochronous data, designating a channel number on which the connection between said unit and said other unit is established.

6. The method according to claim 4, said plug of said unit handles asynchronous data.

7. A connection setting method for connecting a first apparatus to at least one second apparatus, each of the first and second apparatuses having at least one unit and at least one subunit, comprising the steps of:
configuring a plug of a subunit within said first apparatus;
connecting said plug of said subunit within said first apparatus to a plug of a unit within said first apparatus;
configuring a plug of a subunit within said second apparatus;
connecting said plug of said suhunit within said second apparatus to a plug of a unit within said second apparatus; and
connecting said plug of said unit within said first apparatus to said plug of said unit within said second apparatus.

8. The method according to claim 7, further comprising the steps of:
placing said unit within said second apparatus in a data reception state; and
placing said unit within said first apparatus in a data transmission state.

9. A connection setting apparatus for setting up a unit having at least one subunit, comprising:
configuration means for configuring a plug of said subunit;
connection means for connecting said plug of said subunit to a plug of said unit; and
control means for controlling said connection means to connect said plug of said subunil and said plug of said unit after said plug of said subunit is configured by said configuration means.

10. The apparatus according to claim 9, further comprising second configuration means for configuring said plug of said unit, wherein said control means controls said second configuration means to configure said plug of said unit after said plug of said subunit is connected to said plug of said unit.

11. The apparatus according to claim 10, wherein said second configuration means specifies the type of data handled by said plug of said unit.

12. The apparatus according to claim 9, further comprising a second connection means for connecting said plug of said unit to a plug of at least one other unit, and wherein said control means controls said second connection means to connect said plug of said unit to said plug of said other unit after said plug of said subunit is connected to said plug of said unit by said connection means.

13. The apparatus according to claim 12, wherein said second connection means comprises:
incrementing means for incrementing a counter which indicates the number of connections between units; and
designating means for designating, when said plug of said unit handles isochronous data, a channel number on which the connection between said unit and said other unit is established.

14. The apparatus according to claim 12, wherein said plug of said unit handles asynchronous data.

15. A connection setting apparatus for connecting a first apparatus to at least one second apparatus, each of the first and second apparatuses having at least one unit and at least one subunit, comprising:
a first configuration means for configuring a plug of a subunit of said first apparatus;
a first connection means for connecting said plug of said subunit of said first apparatus to a plug of a unit of said first apparatus;
a second configuration means for configuring a plug of a subunit of said second apparatus;
a second connection means for connecting said plug of said subunit of said second apparatus to a plug of a unit of said second apparatus;
a third connection means for connecting said plug of said unit of said first apparatus to said plug of said unit of said second apparatus; and
control means for controlling said first connection means to connect said plug of said subunit of said first apparatus to said plug of said unit of said first apparatus after said plug of said suhunit of said first apparatus is configured by said first configuration means, controlling said second connection means to connect said plug of said subunit of said second apparatus to said plug of said unit of said second apparatus after said plug of said subunit of said second apparatus is configured by said second configuration means, and controlling said third connection means to connect said plug of said unit of said first apparatus to said plug of said unit of said second apparatus after said plug of said subunil of said first apparatus is connected to said plug of said unit of said first apparatus by said first connection means and after said plug of said subunit of said second apparatus is connected to said plug of said unit of said second apparatus by said second connection means.

16. The apparatus according to claim 15, further comprising:
first state setting means for placing said unit of said second apparatus in a data reception state;
second state setting means for placing said unit of said first apparatus in a data transmission state; and
state control means for controlling said first state setting means to place said second apparatus in said data reception state and said second state setting means to place said first apparatus in said data transmission state after said plug of said unit of said first apparatus and said plug of said unit of said second apparatus are connected to each other by said third connection means.
